# EUROPEAN PATENT APPLICATION

(11) **EP 4 811 092 A1**
(43) Date of publication of application: **23.09.2026**
(21) Application number: 24890720.6
(22) Date of filing: 13.11.2024
(51) Int. Cl.: G06F 3/04815

(54) **INTERFACE INTERACTION METHOD AND APPARATUS, DEVICE AND STORAGE MEDIUM**

(30) Priority: 17.11.2023 CN 202311542596
(71) Applicant: Beijing Zitiao Network Technology Co., Ltd., Beijing 100190 (CN)
(72) Inventor: CHEN, Lijun, Beijing 100028 (CN); GAO, Xiangyu, Beijing 100028 (CN); LI, Xingge, Beijing 100028 (CN)
(74) Representative: Marks & Clerk LLP
(86) International application number: PCT/CN2024/131790
(87) International publication number: WO 2025/103365

(57) **Abstract**

Embodiments of the disclosure relate to a method, an apparatus, a device for interface interaction, and a storage medium. The method proposed herein includes: presenting a playback interface of a target work, the playback interface including a target region where a navigation bar is displayed; and switching the target region to present a control panel in response to receiving a first preset operation for pausing playback of the target work, the control panel including at least one control associated with the target work. In this way, the embodiments of the disclosure can provide users with a quick control entry by reusing the navigation region in the paused playback state, thereby improving interaction efficiency.

## Description

The present application claims priority to Chinese Patent Application No. 202311542596.3, filed on November 17, 2023, and entitled "METHOD, APPARATUS, DEVICE FOR INTERFACE INTERACTION AND STORAGE MEDIUM ", which is hereby incorporated by reference in its entirety.

### TECHNICAL FIELD

Example embodiments of the present disclosure generally relate to the field of computers, and in particular, to a method, an apparatus, a device for interface interaction, and a computer-readable storage medium.

### BACKGROUND

With the development of computer technology, the Internet has become an important source for people to obtain various contents. For example, people may obtain various types of works through a work sharing application, such as video works, picture works, music works, and so on. In the process of users viewing works, how to improve users' experience on work playback control is one of the focuses of people's attention.

### SUMMARY

In a first aspect of the present disclosure, a method for interface interaction is provided. The method includes: presenting a playback interface of a target work, the playback interface including a target region where a navigation bar is displayed; and switching the target region to present a control panel in response to receiving a first preset operation for pausing playback of the target work, the control panel including at least one control associated with the target work.

In a second aspect of the present disclosure, an apparatus for interface interaction is provided. The apparatus includes: a presentation module configured to present a playback interface of a target work, the playback interface including a target region where a navigation bar is displayed; and a switch module configured to switch the target region to present a control panel in response to receiving a first preset operation for pausing playback of the target work, the control panel including at least one control associated with the target work.

In a third aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

It would be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numbers refer to the same or similar elements, where:
Fig. 1 illustrates a schematic diagram of an example environment in which the embodiments of the present disclosure may be implemented;
Fig. 2A to Fig. 2F illustrate example interfaces according to some embodiments of the present disclosure;
Fig. 3A to Fig. 3B illustrate example interfaces according to some other embodiments of the present disclosure;
Fig. 4A to Fig. 4E illustrate example interfaces according to some still other embodiments of the present disclosure;
Fig. 5 illustrates a flowchart of an example interface interaction process according to some embodiments of the present disclosure;
Fig. 6 illustrates a schematic structural block diagram of an apparatus for interface interaction according to some embodiments of the present disclosure; and
Fig. 7 illustrates a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it would be appreciated that the present disclosure may be implemented in various forms and should not be construed as limited to the embodiments set forth herein. On the contrary, these embodiments are provided for a more thorough and complete understanding of the present disclosure. It would be appreciated that the drawings and embodiments of the present disclosure are only for illustrative purposes, and are not intended to limit the scope of protection of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different sections/subsections in any way.

In the description of the embodiments of the present disclosure, terms such as "include/comprise" and similar terms thereof should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. Terms such as "first" and "second" may refer to different or same objects. Other explicit and implicit definitions may also be included below.

The embodiments of the present disclosure may involve user data, data acquisition and/or use, etc. All these aspects comply with the corresponding laws, regulations and related provisions. In the embodiments of the present disclosure, all data collection, acquisition, processing, forwarding, use, etc. are performed on the premise that the user is aware and confirms. Accordingly, when implementing the embodiments of the present disclosure, the user should be informed of the type, range of use, use scenarios, etc. of the data or information that may be involved in an appropriate manner according to relevant laws and regulations, and the authorization of the user should be obtained. The specific manner of informing and/or authorizing may change according to the actual situation and application scenarios, and the scope of the present disclosure is not limited in this regard.

The schemes in the present specification and the embodiments, if involving personal information processing, will be processed on the premise of having a legal basis (for example, obtaining the consent of the personal information subject, or being necessary for the performance of a contract, etc.), and will only be processed within the specified or agreed scope. If the user refuses to process personal information other than the necessary information required for the basic functions, it will not affect the user's use of the basic functions.

As briefly mentioned above, people may need to perform a series of playback control operations on a work, such as adjusting the playback speed, in the process of users viewing the work.

In some traditional solutions, corresponding controls are directly placed in the viewing interface. However, due to the limited size of the mobile terminal interface, such a manner may lead to excessive interface information, and on the other hand, it is difficult to cover all needs of the users. In some other solutions, the users need to enter a dedicated control interface to perform operations, which will interrupt the continuity of user interaction, thus affecting the user's interaction experience.

In view of this, embodiments of the present disclosure provide an interface interaction solution. According to this solution, a playback interface of a target work may be presented, and the playback interface includes a target region where a navigation bar is displayed. Further, in response to receiving a first preset operation for pausing playback of the target work, the target region may be switched to present a control panel, where the control panel includes at least one control associated with the target work.

In this way, the embodiments of the present disclosure can provide users with a quick control entry by reusing the navigation region in a paused playback state, thereby improving interaction efficiency.

Various example implementations of this solution are described in further detail below with reference to the accompanying drawings.

### Example Environment

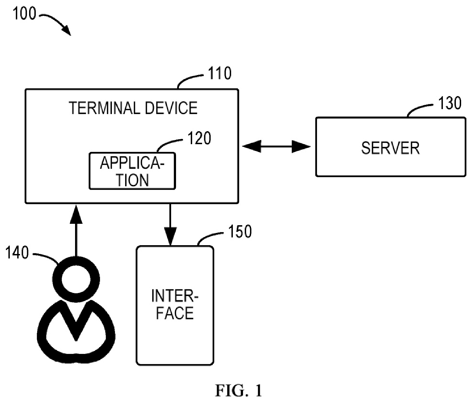

Fig. 1 illustrates a schematic diagram of an example environment 100 in which the embodiments of the present disclosure may be implemented. As shown in Fig. 1, the example environment 100 may include a terminal device 110.

In the example environment 100, the terminal device 110 may run an application 120 for providing and viewing media content. The application 120 may be any appropriate type of application for sharing or acquiring works, examples of which may include but are not limited to online video applications, live streaming applications, and so on. A user 140 may interact with the application 120 via the terminal device 110 and/or its attached devices. In the environment 100 of Fig. 1, if the application 120 is active, the terminal device 110 may present an interface 150 through the application 120.

In some embodiments, the terminal device 110 communicates with a server 130 to implement the provision of services for the application 120. The terminal device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the accessories and peripherals of these devices or any combination thereof. In some embodiments, the terminal device 110 may also support any type of user-specific interface (such as "wearable" circuitry, etc.).

The server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server such as a mainframe, an edge computing node, a computing device in a cloud environment, and the like. The server 130 may provide backstage services for the application 120 supporting the virtual scene in the terminal device 110.

A communication connection may be established between the server 130 and the terminal device 110. The communication connection may be established in a wired or wireless manner. The communication connection may include but is not limited to a Bluetooth connection, a mobile network connection, a Universal Serial Bus (USB) connection, a Wireless Fidelity (Wi-Fi) connection, etc., and the embodiments of the present disclosure are not limited in this regard. In the embodiments of the present disclosure, the server 130 and the terminal device 110 may implement signaling interaction through the communication connection between the two.

It would be appreciated that the structure and function of each element in the environment 100 are described for illustrative purposes only, without suggesting any limitation on the scope of the present disclosure.

Some example embodiments of the present disclosure will be described below with continued reference to the drawings.

### Example Interaction for Video Work

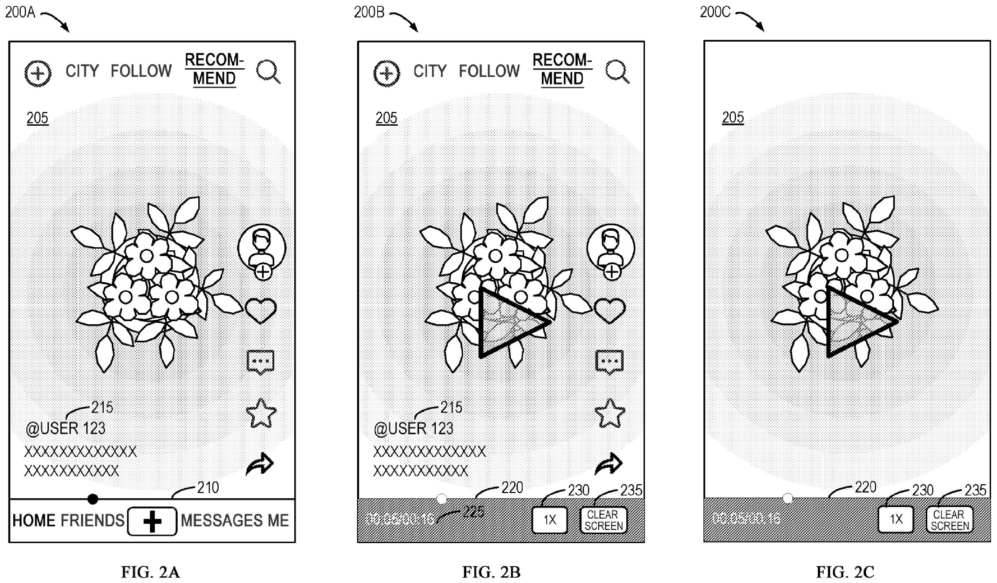

Example interactions of some embodiments of the present disclosure will be described below with reference to Fig. 2A to Fig. 2E. Fig. 2A to Fig. 2E illustrate example interfaces 200A to 200E according to some embodiments of the present disclosure, and the interfaces 200A to 200E may be provided, for example, by the terminal device 110 shown in Fig. 1.

Specifically, as shown in Fig. 2A, the terminal device 110 may provide an interface 200A. The interface 200A is a playback interface of a video work 205. As shown in Fig. 2A, the interface 200A may include a navigation bar 210 displayed in the bottom region (also referred to as the target region).

As an example, the navigation bar 210 may provide a plurality of navigation tabs for navigating to different pages, for example "Home", "Friends", "Messages", and "Me". The present disclosure is not intended to limit the specific arrangement of the navigation tabs.

Additionally, the interface 200A may further include, for example, a set of interface elements 215 superimposedly displayed on the video work 205. Such interface elements 215 may include, for example, description information of the video work, various controls, and the like.

In some embodiments, in a case that a first preset operation (for example, clicking on the playback region of the video work 205) for pausing playback of the work (for example, the video work 205) is received, the terminal device 110 may switch the target region (for example, the bottom region) in the playback interface 200A to present the control panel. Considering that the pause state may usually express people's needs for controlling the playback of the work, the interaction efficiency can be further improved by presenting the control panel in connection with the pause state.

As shown in Fig. 2B, the terminal device 110 may present a control panel 220 in the bottom region of an interface 200B. The control panel 220 may include a set of controls associated with the video work 205.

In some embodiments, such a set of controls may include at least one control for performing an appropriate operation associated with the video work 205. In some embodiments, such a control may include a first-type control for controlling the playback process of the work (for example, the video work 205) in the playback interface. For example, the first-type control may include a control for adjusting the playback speed or adjusting the definition, and the like.

Additionally or alternatively, such a control may include a second-type control for adjusting a display style of the playback interface. For example, the second-type control may include a horizontal screen or vertical screen style switching control, or a clear screen control as described below.

Additionally or alternatively, such a control may include a third-type control for receiving an interaction operation of the current user on the work (for example, the video work 205). For example, the third-type control may include a control for feeding back disinterest, a control for screen projection, a control for downloading the work, and the like.

Additionally or alternatively, such a control may include a fourth-type control for triggering presentation of a page associated with the work (for example, the video work 205). For example, such a fourth-type control may include a recommendation control to trigger presentation of a corresponding content recommendation page. Alternatively, such a fourth-type control may also be a product link control to trigger a product page corresponding to the work.

In some embodiments, the controls presented in the control panel 220 may be different from the controls shown in Fig. 2A, for example.

Specific examples of controls will be described below in conjunction with the drawings. Taking Fig. 2B as an example, such a set of controls may include, for example, a control 230 and a control 235.

In some embodiments, in the case that the currently played work is a video work (for example, the video work 205), the control panel 220 may provide the control 230, for example. The control 230 may be used, for example, to control the playback speed of the video work 205. For example, the terminal device 110 may speed up or slow down the playback speed of the video work 205 based on the interaction with the control 230.

In some embodiments, the control 235 is also referred to as a clear screen control. In a case that a trigger on the control 235 is received, as shown in Fig. 2C, the terminal device 110 may display at least part of the set of interface elements 215 superimposedly displayed on the video work 205 in the interface. For example, as shown in Fig. 2C, the terminal device 110 may only keep the picture of the video work 205 and the control panel 220.

In addition, as shown in Fig. 2B, the control panel 220 may further present playback progress information 225 of the work (for example, the video work 205) to indicate the current playback progress of the video work 205.

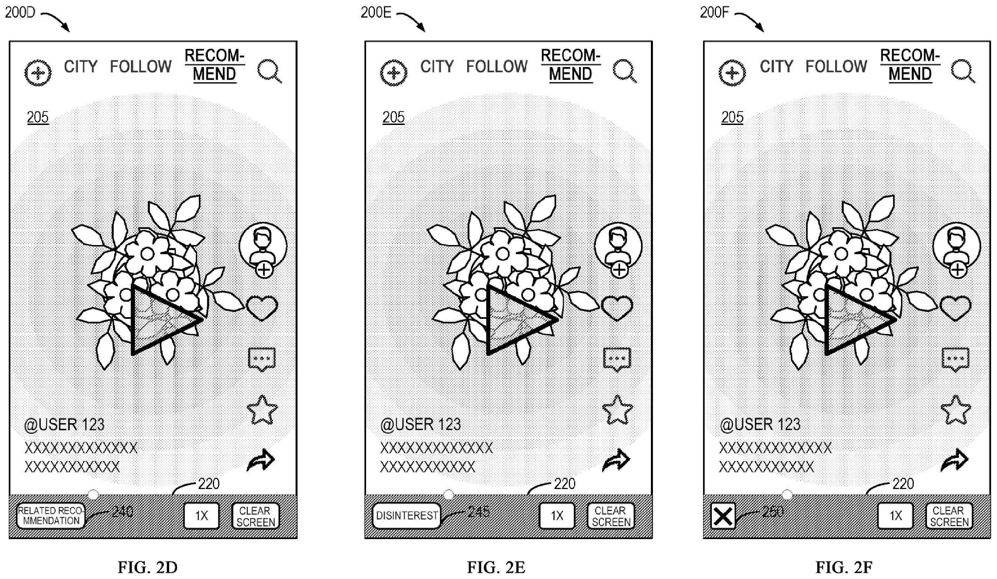

In some embodiments, in a case that the first preset operation is received, the terminal device 110 may present the control panel 220 shown in Fig. 2D. Unlike the example discussed with reference to Fig. 2B, the control panel 220 shown in Fig. 2D may display a control 240. The control 240 may be used, for example, to trigger presentation of at least one recommended content (for example, other recommended works) associated with the work (for example, the video work 205).

In some embodiments, in a case that the first preset operation is received, the terminal device 110 may present the control panel 220 shown in Fig. 2E. Unlike the examples discussed with reference to Fig. 2B and Fig. 2D, the control panel 220 shown in Fig. 2E may display a control 245. The control 245 may obtain, for example, feedback information (for example, disinterest) of the current user on the work (for example, the video work 205). The control 245 may also be configured, for example, to trigger the terminal device 110 to switch to play another work.

In some embodiments, in a case that the first preset operation is received, the terminal device 110 may present the control panel 220 shown in Fig. 2F. Unlike the examples discussed with reference to Fig. 2B, Fig. 2D and Fig. 2E, the control panel 220 shown in Fig. 2F may display a closing entry 250. Further, in a case that a selection of the closing entry 250 is received, the terminal device 110 may stop displaying the control panel 220 and may, for example, switch the target region to present the navigation bar 210 shown in Fig. 2A.

It would be appreciated that in addition to the specific control combinations described above, the control panel 220 may also present an appropriate combination of one or more controls discussed above or to be discussed below.

In some embodiments, the terminal device 110 may further stop displaying the control panel 220 based on a received preset operation (also referred to as a second preset operation). In an example, the terminal device 110 may stop displaying the control panel 220 and switch to presenting the navigation bar 210 based on the trigger of the closing entry 250 as shown in Fig. 2F.

As another example, such a second preset operation may further include, for example, a sliding operation associated with the control panel 220. For example, upon receiving a first sliding operation in a predetermined direction (for example, from top to bottom) inside the control panel 220, the terminal device 110 may stop displaying the control panel 220 and switch to presenting the navigation bar 210.

In some embodiments, in the scenario where the display of the control panel 220 is triggered by the pause operation, upon receiving a request to continue playing the work (for example, the video work 205), the terminal device 110 may continue playing the video work 205, and may stop displaying the control panel 220 and switch to presenting the navigation bar 210. In this way, the embodiments of the present disclosure may reduce the interference with the work playback process.

In some embodiments, in the state where the control panel shown in Fig. 2B to Fig. 2F is displayed, the terminal device 110 may also respond to a second sliding operation associated with the interface.

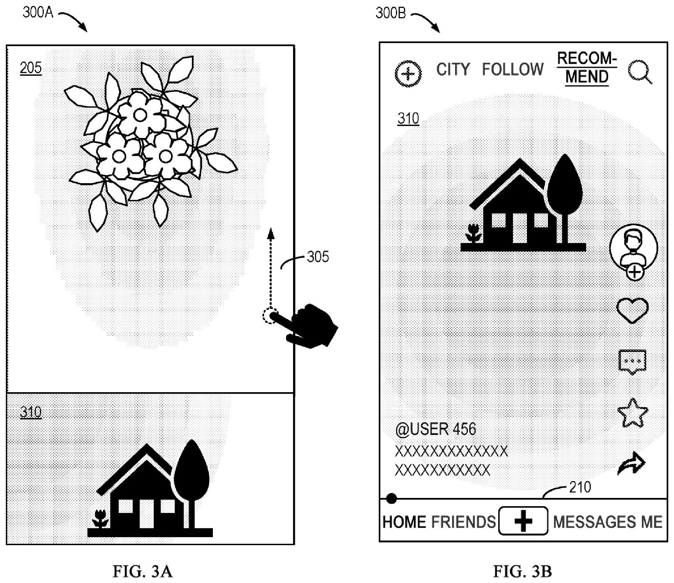

Specifically, as shown in Fig. 3A, the terminal device 110 may receive the second sliding operation 305. As an example, the second sliding operation 305 may be configured, for example, to trigger the terminal device 110 to switch to play another work 310. Further, as shown in Fig. 3A, during a duration of the second sliding operation 305, the terminal device 110 may hide the control panel (for example, the control panel 220) as discussed above.

Further, if the sliding distance of the second sliding operation 305 reaches the threshold distance, the terminal device 110 may present the interface 300B shown in Fig. 3B. In the interface 300B, the terminal device 110 may switch to play another work 310 and may display the navigation bar 210 in the bottom region. On the contrary, if the distance of the second sliding operation is less than the threshold distance, the terminal device 110 may continue to present the video work 205 in the interface and may present the navigation bar 210 in the bottom region, similar to that shown in Fig. 2A.

It would be appreciated that the second sliding operation 305 may further include, for example, a left-right horizontal sliding operation to switch different tabs, which may have similar interaction logic.

Based on the process discussed above, the embodiments of the present disclosure can provide users with a quick control entry by reusing the navigation region, thereby improving interaction efficiency.

### Example Interactions for Other Types of Works

In some embodiments, for other types of works that support playback, the terminal device 110 may also trigger to switch the template region for displaying the navigation bar to present the control panel based on an appropriate preset operation (for example, the pause playback operation).

In some embodiments, in the case that the works presented in the interface are different, the specific controls provided in the corresponding control panel may also be different, for example. In some examples, the controls provided in the control panel may be determined based on a first attribute of the current work, for example. For example, as will be described in detail below, different types of works may correspond to different controls or control combinations, for example. As another example, works involving different contents may also correspond to different controls or control combinations, for example. For example, movie and television video works and product promotion video works may correspond to different controls or control combinations.

In some embodiments, the controls provided in the control panel may also be determined based on a second attribute of the current user. It would be appreciated that the acquisition and use of such attributes are performed with the knowledge and permission of the user.

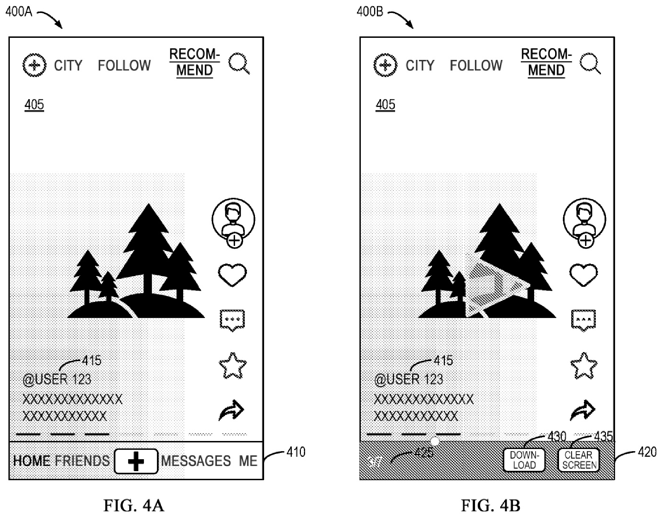

The relevant logic of other types of works will be described below in conjunction with Fig. 4A to Fig. 4E.

By way of example, Fig. 4A illustrates a playback interface 400A of a picture album work 405. Similarly, in the interface 400A, the terminal device 110 may display a navigation bar 410 and interface elements 415.

Similarly, in a case that the first preset operation (for example, the pause playback operation) is received, the terminal device 110 may present the interface 400B shown in Fig. 4B. Accordingly, the terminal device 110 may stop presenting the navigation bar 410 and display the control panel 420 shown in Fig. 4B.

As shown in Fig. 4B, the control panel 420 may display playback progress information 425 of the work (for example, the picture album work 405) to indicate the current playback progress of the video work 405 (for example, currently playing the third picture in the picture album).

In addition, as shown in Fig. 4B, the control panel 420 may further provide a control 430 for downloading the work (for example, the picture album work 405).

Additionally, the control panel 420 may further provide a control 435. Similar to the control 235 discussed above, the control 245 may be configured, for example, to stop displaying at least part of the set of interface elements 415 in the interface.

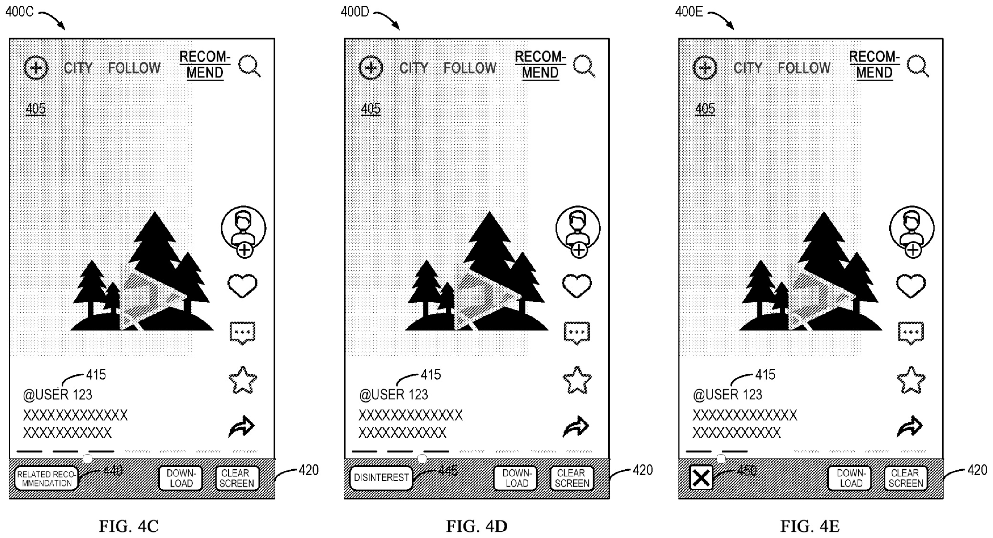

In some embodiments, in a case that the first preset operation is received, the terminal device 110 may present the control panel 420 as shown in Fig. 4C. Unlike the examples discussed with reference to Fig. 4B, the control panel 420 shown in Fig. 4C may display a control 440. The control 440 may be configured, for example, to trigger presentation of at least one recommended content (for example, other recommended works) associated with the work (for example, the picture album work 405).

In some embodiments, in a case that the first preset operation is received, the terminal device 110 may present the control panel 420 shown in Fig. 4D. Unlike the examples discussed with reference to Fig. 4B and Fig. 4C, the control panel 420 shown in Fig. 4D may display a control 445. The control 445 may obtain, for example, feedback information (for example, disinterest) of the current user on the work (for example, the picture album work 405). The control 445 may also be configured, for example, to trigger the terminal device 110 to switch to play another work.

In some embodiments, in a case that the first preset operation is received, the terminal device 110 may present the control panel 420 shown in Fig. 4E. Unlike the examples discussed with reference to Fig. 4B, Fig. 4C and Fig. 4D, the control panel 420 shown in Fig. 4E may display a closing entry 450. Further, in a case that a selection of the closing entry 450 is received, the terminal device 110 may stop displaying the control panel 420 and may, for example, switch the target region to present the navigation bar 410 shown in Fig. 4A.

It would be appreciated that the control panel 420 discussed above may have interaction logic similar to that of the control panel 220, for example. For example, the control panel 420 may also be hidden in response to the sliding operation in the corresponding region. Alternatively, similar to that described with reference to Fig. 3A and Fig. 3B, the control panel 420 may be similarly hidden when the sliding operation for the interface is received. The details hereof are not repeated herein in the present disclosure .

In some embodiments, in addition to the video work and the picture album work introduced above, the present disclosure may also support triggering the presentation of the control panel in the playback interface of other types of works. Such other types of works may include, for example, animated picture works and the like. As an example, for an animated picture work, it may have similar logic to that of the video work 205 mentioned above, and the details hereof are not repeated herein in the present disclosure.

In some embodiments, for different types of works, the terminal device 110 may provide control panels containing different controls, for example. For example, in the case that the target work is the first work type, the control panel is configured to provide the first set of controls; and in the case that the work is the second work type, the control panel is configured to provide the second set of controls, where the first set of controls is different from the second set of controls. It would be appreciated that the target work may include two or more types, and in some cases, two different specific work types may correspond to the same set of controls, or two different specific work types may correspond to different groups of controls.

Based on this manner, the embodiments of the present disclosure are able to provide a control panel that is more in line with the work type, thereby improving the user's interaction efficiency.

### Example Process

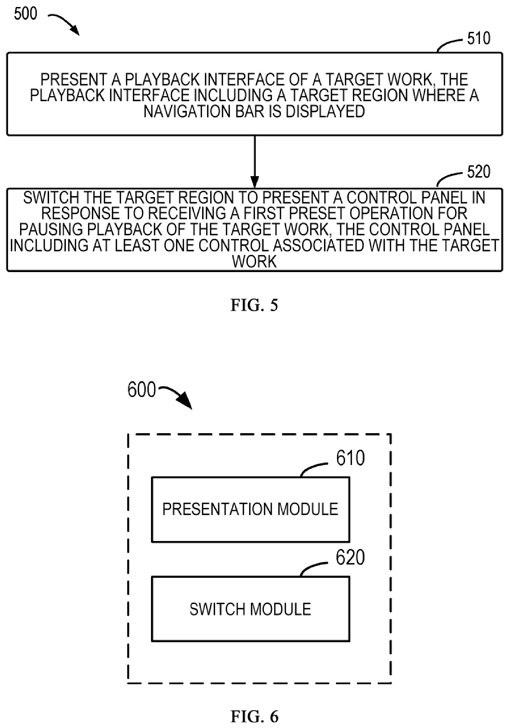

Fig. 5 illustrates a flowchart of an example interface interaction process 500 according to some embodiments of the present disclosure. The process 500 may be implemented at the terminal device 110. The process 500 is described below with reference to Fig. 1.

As shown in Fig. 5, at block 510, the terminal device 110 presents a playback interface of a target work, the playback interface including a target region displaying a navigation bar.

At block 520, in response to receiving a first preset operation for pausing playback of the target work, the terminal device 110 switches the target region to present a control panel, the control panel including at least one control associated with the target work.

In some embodiments, the at least one control includes at least one of the following types: a first-type control for controlling a playback process of the target work in the playback interface; a second-type control for adjusting a display style of the playback interface; a third-type control for receiving an interaction operation of a current user on the target work; and a fourth-type control for triggering presentation of a page associated with the target work.

In some embodiments, in the case that the target work is a video work, the at least one control includes a first control for controlling a playback speed of the target work.

In some embodiments, the at least one control includes a second control for downloading the target work.

In some embodiments, the playback interface further includes a set of interface elements superimposedly displayed on the target work, and the at least one control includes a third control for stopping displaying at least part of the set of interface elements.

In some embodiments, the at least one control includes a fourth control for obtaining feedback information of a current user on the target work.

In some embodiments, the at least one control includes a fifth control for content recommendation, and the fifth control is configured to trigger presentation of at least one recommended content associated with the target work.

In some embodiments, the process 500 further includes: switching the target region to present the navigation bar in response to receiving a second preset operation associated with the control panel.

In some embodiments, the second preset operation includes: a first sliding operation associated with the control panel; or a selection operation on a closing entry in the control panel.

In some embodiments, the control panel further presents playback progress information of the target work.

In some embodiments, the at least one control presented in the control panel is determined based on at least one of the following: a first attribute of the target work; and a second attribute of a current user.

In some embodiments, in accordance with that the target work is of a first work type, the control panel is configured to provide a first set of controls; and in accordance with that the target work is of a second work type, the control panel is configured to provide a second set of controls, where the first set of controls is different from the second set of controls.

In some embodiments, the target work includes one of a video work, a picture album work, or an animated picture work.

In some embodiments, the process 500 further includes: switching the target region to present the navigation bar in response to receiving a request to continue playing the target work.

In some embodiments, the process 500 further includes: hiding, in response to receiving a second sliding operation associated with the target interface, the control panel during a duration of the second sliding operation.

In some embodiments, the process 500 further includes: presenting the target work in the target interface and displaying the navigation bar in the target region in response to a distance of the second sliding operation being less than a threshold distance; or presenting another work in the target interface and displaying the navigation bar in the target region in response to the distance of the second sliding operation reaching the threshold distance.

### Example Apparatus and Device

The embodiments of the present disclosure further provide corresponding apparatuses for implementing the above methods or processes. Fig. 6 illustrates a schematic structural block diagram of an apparatus 600 for interface interaction according to some embodiments of the present disclosure. The apparatus 600 may be implemented as or included in the terminal device 110. Various modules/components in the apparatus 600 may be implemented by hardware, software, firmware, or any combination thereof.

As shown in Fig. 6, the apparatus 600 includes: a presentation module 610 configured to present a playback interface of a target work, the playback interface including a target region where a navigation bar is displayed; and a switch module 620 configured to switch the target region to present a control panel in response to receiving a first preset operation for pausing playback of the target work, the control panel including at least one control associated with the target work.

In some embodiments, the at least one control includes at least one of the following types: a first-type control for controlling a playback process of the target work in the playback interface; a second-type control for adjusting a display style of the playback interface; a third-type control for receiving an interaction operation of a current user on the target work; and a fourth-type control for triggering presentation of a page associated with the target work.

In some embodiments, in the case that the target work is a video work, the at least one control includes a first control for controlling a playback speed of the target work.

In some embodiments, the at least one control includes a second control for downloading the target work.

In some embodiments, the playback interface further includes a set of interface elements superimposedly displayed on the target work, the at least one control including a third control for stopping displaying at least part of the set of interface elements.

In some embodiments, the at least one control includes a fourth control for obtaining feedback information of a current user on the target work.

In some embodiments, the at least one control includes a fifth control for content recommendation, the fifth control being configured to trigger presentation of at least one recommended content associated with the target work.

In some embodiments, the apparatus 600 further includes a first switch module configured to switch the target region to present the navigation bar in response to receiving a second preset operation associated with the control panel.

In some embodiments, the second preset operation includes: a first sliding operation associated with the control panel; or a selection operation on a closing entry in the control panel.

In some embodiments, the control panel further presents playback progress information of the target work.

In some embodiments, the at least one control presented in the control panel is determined based on at least one of the following: a first attribute of the target work; and a second attribute of a current user.

In some embodiments, in accordance with that the target work is of a first work type, the control panel is configured to provide a first set of controls; and in accordance with that the target work is of a second work type, the control panel is configured to provide a second set of controls, where the first set of controls is different from the second set of controls.

In some embodiments, the target work includes one of a video work, a picture album work, or an animated picture work.

In some embodiments, the apparatus 600 further includes a second switch module configured to switch the target region to present the navigation bar in response to receiving a request to continue playing the target work.

In some embodiments, the apparatus 600 further includes a hiding module configured to hide, in response to receiving a second sliding operation associated with the target interface, the control panel during a duration of the second sliding operation.

In some embodiments, the apparatus 600 further includes a sliding control module configured to: present the target work in the target interface and display the navigation bar in the target region in response to a distance of the second sliding operation being less than a threshold distance; or present another work in the target interface and display the navigation bar in the target region in response to the distance of the second sliding operation reaching the threshold distance.

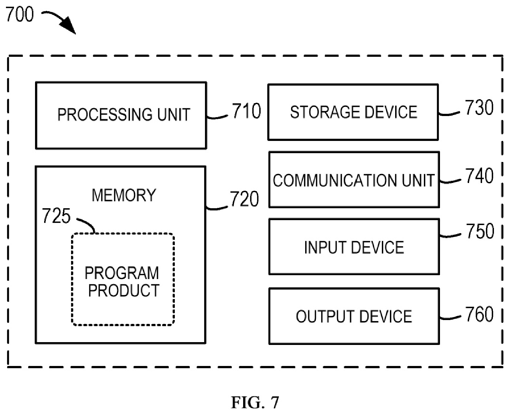

Fig. 7 illustrates a block diagram of an electronic device 700 in which one or more embodiments of the present disclosure may be implemented. It would be appreciated that the electronic device 700 shown in Fig. 7 is merely illustrative, without suggesting any limitation on the functions and scopes of the embodiments described herein. The electronic device 700 shown in Fig. 7 may be used to implement the terminal device 110 of Fig. 1.

As shown in Fig. 7, the electronic device 700 is in the form of a general-purpose electronic device. The components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and may execute various processes based on the programs stored in the memory 720. In a multiprocessor system, multiple processing units execute computer executable instructions in parallel to improve the parallel processing capability of the electronic device 700.

The electronic device 700 typically includes multiple computer storage medium. Such medium may be any available medium that is accessible to the electronic device 700, including but not limited to volatile and non-volatile medium, and removable and non-removable medium. The memory 720 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 730 may be any removable or non-removable medium, and may include a machine-readable medium such as a flash drive, a disk, or any other medium, which may be used to store information and/or data and may be accessed within the electronic device 700.

The electronic device 700 may further include additional removable/non-removable, volatile/non-volatile memory medium. Although not shown in Fig. 7, it is possible to provide a disk driver for reading from or writing to a removable, non-volatile disk (such as a "floppy disk"), and an optical disk driver for reading from or writing to a removable, non-volatile optical disk. In these cases, each driver may be connected to the bus (not shown) by one or more data medium interfaces. The memory 720 may include a computer program product 725, which has one or more program modules configured to perform various methods or acts of the various embodiments of the present disclosure.

The communication unit 740 implements communication with other electronic devices through the communication medium. Additionally, the functions of the components of the electronic device 700 may be implemented by a single computing cluster or multiple computing machines, which may communicate through communication connections. Therefore, the electronic device 700 may use a logical connection with one or more other servers, network personal computers (PCs) or other network nodes to operate in a networked environment.

The input device 750 may be one or more input devices, such as a mouse, a keyboard, a tracking ball, etc. The output device 760 may be one or more output devices, such as a display, a speaker, a printer, etc. The electronic device 700 may also communicate with one or more external devices (not shown) such as storage devices, display devices, etc., with one or more devices that enable users to interact with the electronic device 700, or with any device that enables the electronic device 700 to communicate with one or more other electronic devices (e.g., network cards, modems, etc.) via the communication unit 740 as needed. Such communication may be performed via input/output (I/O) interfaces (not shown).

According to an example implementation of the present disclosure, a computer-readable storage medium is provided, which has computer-executable instructions stored thereon, where the computer-executable instructions are executed by a processor to implement the method described above. According to an example implementation of the present disclosure, there is further provided a computer program product, which is tangibly stored on a non-transitory computer-readable medium and includes computer-executable instructions, which are executed by a processor to implement the method described above.

Aspects of the present disclosure are described herein with reference to flowcharts and/or block diagrams of methods, apparatuses, devices and computer program products implemented according to the present disclosure. It would be appreciated that each block of the flowcharts and/or block diagrams, and combinations of blocks in the flowcharts and/or block diagrams, may be implemented by computer-readable program instructions.

These computer-readable program instructions may be provided to the processing unit of a general-purpose computer, a special-purpose computer, or other programmable data processing apparatus, so that a machine is produced, which enables the instructions, when executed by the processing unit of the computer or other programmable data processing apparatus, to produce an apparatus for implementing the functions/acts specified in one or more blocks of the flowcharts and/or block diagrams. These computer-readable program instructions may also be stored in a computer-readable storage medium, which enables the computer, the programmable data processing apparatus and/or other devices to work in a specific manner, so that the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, another programmable data processing apparatus, or other devices, so that a series of operations and steps are performed on the computer, the other programmable data processing apparatus, or the other devices, to produce a computer-implemented process, thereby enabling the instructions executed on the computer, the other programmable data processing apparatus, or the other devices to implement the functions/acts specified in one or more blocks of the flowcharts and/or block diagrams.

These computer-readable program instructions may be provided to the processing unit of a general-purpose computer, a special-purpose computer, or other programmable data processing apparatus, so that a machine is produced, which enables the instructions, when executed by the processing unit of the computer or other programmable data processing apparatus, to produce an apparatus for implementing the functions/acts specified in one or more blocks of the flowcharts and/or block diagrams. These computer-readable program instructions may also be stored in a computer-readable storage medium, which enables the computer, the programmable data processing apparatus and/or other devices to work in a specific manner, so that the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, another programmable data processing apparatus, or other devices, so that a series of operations and steps are performed on the computer, the other programmable data processing apparatus, or the other devices, to produce a computer-implemented process, thereby enabling the instructions executed on the computer, the other programmable data processing apparatus, or the other devices to implement the functions/acts specified in one or more blocks of the flowcharts and/or block diagrams.

## Claims

1. A method for interface interaction, comprising:
presenting a playback interface of a target work, the playback interface comprising a target region where a navigation bar is displayed; and
switching the target region to present a control panel in response to receiving a first preset operation for pausing playback of the target work, the control panel comprising at least one control associated with the target work.

2. The method of claim 1, wherein the at least one control comprises at least one of the following types:
a first-type control for controlling a playback process of the target work in the playback interface;
a second-type control for adjusting a display style of the playback interface;
a third-type control for receiving an interaction operation of a current user on the target work; and
a fourth-type control for triggering presentation of a page associated with the target work.

3. The method of claim 1, wherein in accordance with that the target work is a video work, the at least one control comprises a first control for controlling a playback speed of the target work.

4. The method of claim 1, wherein the at least one control comprises a second control for downloading the target work.

5. The method of claim 1, wherein the playback interface further comprises a set of interface elements superimposedly displayed on the target work, and the at least one control comprises a third control for stopping displaying at least part of the set of interface elements.

6. The method of claim 1, wherein the at least one control comprises a fourth control for obtaining feedback information of a current user on the target work.

7. The method of claim 1, wherein the at least one control comprises a fifth control for content recommendation, and the fifth control is configured to trigger presentation of at least one recommended content associated with the target work.

8. The method of claim 1, further comprising:
switching the target region to present the navigation bar in response to receiving a second preset operation associated with the control panel.

9. The method of claim 8, wherein the second preset operation comprises:
a first sliding operation associated with the control panel; or
a selection operation on a closing entry in the control panel.

10. The method of claim 1, wherein the control panel further presents playback progress information of the target work.

11. The method of claim 1, wherein the at least one control presented in the control panel is determined based on at least one of the following:
a first attribute of the target work; and
a second attribute of a current user.

12. The method of claim 1, wherein:
in accordance with that the target work is of a first work type, the control panel is configured to provide a first set of controls; and
in accordance with that the target work is of a second work type, the control panel is configured to provide a second set of controls, wherein the first set of controls is different from the second set of controls.

13. The method of claim 1, wherein the target work comprises one of a video work, a picture album work, or an animated picture work.

14. The method of claim 1, further comprising:
switching the target region to present the navigation bar in response to receiving a request to continue playing the target work.

15. The method of claim 1, further comprising:
hiding, in response to receiving a second sliding operation associated with the target interface, the control panel during a duration of the second sliding operation.

16. The method of claim 15, further comprising:
presenting the target work in the target interface and displaying the navigation bar in the target region in response to a distance of the second sliding operation being less than a threshold distance; or
presenting another work in the target interface and displaying the navigation bar in the target region in response to the distance of the second sliding operation reaching the threshold distance.

17. An apparatus for interface interaction, comprising:
a presentation module configured to present a playback interface of a target work, the playback interface comprising a target region where a navigation bar is displayed; and
a switch module configured to switch the target region to present a control panel in response to receiving a first preset operation associated with the playback interface, the control panel comprising at least one control associated with the target work.

18. An electronic device, comprising:
at least one processing unit; and
at least one memory coupled to the at least one processing unit and storing instructions executable by the at least one processing unit, the instructions, when executed by the at least one processing unit, causing the electronic device to perform the method of any one of claims 1 to 16.

19. A computer-readable storage medium having a computer program stored thereon, the computer program being executable by a processor to implement the method of any one of claims 1 to 16.
